# EUROPÄISCHE PATENTSCHRIFT

(11) **EP 3 637 593 B1**
(45) Veröffentlichungstag und Bekanntmachung des Hinweises auf die Patenterteilung: **08.07.2026**
(21) Anmeldenummer: 18465596.7
(22) Anmeldetag: 10.10.2018
(51) Int. Cl.: H02K 3/52

(54) **ELEKTROMOTOR STATOR**
ELECTRIC MOTOR STATOR
STATOR DE MOTEUR ÉLECTRIQUE

(43) Veröffentlichungstag der Anmeldung: 15.04.2020
(73) Patentinhaber: Schaeffler Technologies AG & Co. KG, 91074 Herzogenaurach (DE)
(72) Erfinder: Aronet, Vlad, 325300 Bocsa, Caras-Severin (RO)
(74) Vertreter: Schaeffler Technologies

(56) Entgegenhaltungen:
- EP-A1- 3 340 440
- EP-A2- 2 063 516
- EP-A2- 2 555 390
- WO-A1-2015/040943
- JP-A- 2006 204 029
- JP-A- 2012 135 176
- US-A1- 2009 127 964
- US-A1- 2009 140 595
- US-A1- 2015 061 430
- US-A1- 2015 061 431

## Beschreibung

Die vorliegende Erfindung betrifft einen Stator für einen Elektromotor, einen Elektromotor mit dem Stator und ein Verfahren zum Herstellen des Stators.

Elektromotoren weisen allgemein einen Stator mit Spulenwicklungen und einen Rotor auf. Durch entsprechende elektrische Versorgung der Spulenwicklungen wird ein in einer Umfangsrichtung umlaufendes Magnetfeld erzeugt, dem der Rotor folgt und sich dabei um eine Rotationsachse (des Elektromotors bzw. Stators) dreht.

Die Druckschrift EP 3 340 440 A1 weist einen bürstenlosen Motor mit einem Permanentmagnetrotor und einem bewickelten Stator auf, wobei die Wicklung des Stators mittels Verbindungsleitern elektrisch mit Energie versorgt wird.

Die Druckschrift EP 2 555 390 A2 offenbart einen bürstenlosen Elektromotor mit einem ringscheibenförmigen Verbindungselement.

Die Druckschrift JP 2006 204029 A weist einen Elektromotor mit einem bewickelten Stator auf, wobei die Wicklung des Stators mittels einer Klemmverbindung elektrisch kontaktiert ist.

Eine Aufgabe einer Ausführung der vorliegenden Erfindung ist es, einen Elektromotor bzw. Stator für einen Elektromotor bzw. dessen Herstellung zu verbessern.

Diese Aufgabe wird durch einen Stator mit den Merkmalen des Anspruchs 1 gelöst. Ansprüche 8, 9 stellen einen Elektromotor mit einem hier beschriebenen Stator bzw. ein Verfahren zum Herstellen eines hier beschriebenen Stators unter Schutz. Vorteilhafte Ausführungsformen der Erfindung sind Gegenstand der Unteransprüche.

Eine Aufgabe einer Ausführung der vorliegenden Erfindung ist es, einen Elektromotor bzw. Stator für einen Elektromotor bzw. dessen Herstellung zu verbessern.

Diese Aufgabe wird durch einen Stator mit den Merkmalen des Anspruchs 1 gelöst. Ansprüche 8, 9 stellen einen Elektromotor mit einem hier beschriebenen Stator bzw. ein Verfahren zum Herstellen eines hier beschriebenen Stators unter Schutz. Vorteilhafte Ausführungsformen der Erfindung sind Gegenstand der Unteransprüche.

Nach einer Ausführung der vorliegenden Erfindung weist ein Stator für einen Elektromotor bzw. eines Elektromotors eine Mehrzahl von, insbesondere wenigstens teilweise metallischen, Leitungen auf, mit denen Spulenwicklungen des Stators elektrisch bzw. mit Strom bzw. Spannung versorgbar sind bzw. versorgt werden bzw. die hierzu vorgesehen, insbesondere eingerichtet, sind bzw. verwendet werden.

In einer Ausführung sind die Leitungen integral bzw. einstückig mit den Spulenwicklungen ausgebildet, insbesondere können die Leitungen wenigstens teilweise zu den Spulen gewickelt sein.

Nach einer Ausführung der vorliegenden Erfindung weist ein Stator für einen Elektromotor bzw. eines Elektromotors eine Mehrzahl von, insbesondere wenigstens teilweise metallischen, Leitungen auf, mit denen Spulenwicklungen des Stators elektrisch bzw. mit Strom bzw. Spannung versorgbar sind bzw. versorgt werden bzw. die hierzu vorgesehen, insbesondere eingerichtet, sind bzw. verwendet werden.

In einer Ausführung sind die Leitungen integral bzw. einstückig mit den Spulenwicklungen ausgebildet, insbesondere können die Leitungen wenigstens teilweise zu den Spulen gewickelt sein.

In einer anderen Ausführung sind die Leitungen und die Spulenwicklungen separat hergestellt und in einer Weiterbildung anschließend zur elektrischen Versorgung der Spulenwicklungen über die Leitungen miteinander, in einer Ausführung stoffschlüssig, verbunden.

In einer Ausführung verbinden die Leitungen jeweils wenigstens zwei, in einer Weiterbildung (in Umfangsrichtung des Stators) benachbarte Spulenwicklungen.

In einer Ausführung sind die Leitungen wenigstens teilweise mit einer Isolierhülle, die in einer Weiterbildung Kunststoff aufweist, insbesondere hieraus bestehen kann, ummantelt. Dadurch kann in einer Ausführung der Stator kompakter und/oder einfacher hergestellt und/oder sein Betriebsverhalten verbessert werden.

Nach einer Ausführung der vorliegenden Erfindung weist der Stator einen Kontaktring mit Anschlüssen auf, über die die Leitungen elektrisch bzw. mit Strom bzw. Spannung versorgbar sind bzw. versorgt werden bzw. die hierzu vorgesehen, insbesondere eingerichtet, sind bzw. verwendet werden.

Die Anschlüsse sind wenigstens teilweise mit einer Isolierhülle, die in einer Weiterbildung Kunststoff aufweist, insbesondere hieraus bestehen kann, ummantelt. Dadurch kann in einer Ausführung der Stator kompakter und/oder einfacher hergestellt und/oder sein Betriebsverhalten verbessert werden.

Nach einer Ausführung der vorliegenden Erfindung sind bzw. werden die vorstehend genannten Anschlüsse in einem ein- oder mehrteiligen Kontaktringkörper, insbesondere bei dessen Urformen, wenigstens teilweise eingeformt, insbesondere wenigstens teilweise eingegossen, in einer Ausführung wenigstens teilweise eingespritzt, insbesondere mit Kunststoff. Der Kontaktringkörper weist somit in einer Ausführung Kunststoff auf, er kann insbesondere hieraus bestehen, insbesondere urgeformt werden bzw. sein. Der Kunststoff ist in einer Ausführung elektrisch isolierend.

Zusätzlich oder alternativ sind bzw. werden die vorstehend genannten Leitungen in einer Ausführung in einem ein- oder mehrteiligen Statorkörper, insbesondere bei dessen Urformen, wenigstens teilweise eingeformt, insbesondere wenigstens teilweise eingegossen, in einer Ausführung wenigstens teilweise eingespritzt, insbesondere mit Kunststoff. Der Statorkörper weist somit in einer Ausführung Kunststoff auf, er kann insbesondere hieraus bestehen, insbesondere urgeformt werden bzw. sein. Dieser Kunststoff ist in einer Ausführung elektrisch isolierend.

Hierdurch kann in einer Ausführung die Zuverlässigkeit und/oder das Gewicht des Stators verbessert werden.

Nach einer Ausführung der vorliegenden Erfindung werden, insbesondere nach dem Einformen und/oder materialentfernend, insbesondere -abtragend, Bohrungen, in einer Ausführung Durchgangsbohrungen, in dem Kontaktringkörper hergestellt, welche die Anschlüsse, insbesondere (wenigstens) deren Isolierhülle, an- oder durchschneiden, bzw. weist der Kontaktringkörper diese Bohrungen auf.

Zusätzlich oder alternativ werden, insbesondere nach dem Einformen, materialentfernend, insbesondere -abtragend, und/oder zusammen mit bzw. bei dem Herstellen der Bohrungen in dem Kontaktringkörper, Bohrungen, in einer Ausführung Sacklochbohrungen, in dem Statorkörper hergestellt, welche die Leitungen, insbesondere (wenigstens) deren Isolierhülle, an- oder durchschneiden, bzw. weist der Statorkörper diese Bohrungen auf.

Diese Bohrungen sind bzw. werden in dem Kontaktringkörper und/oder diese Bohrungen in dem Statorkörper (jeweils) wenigstens teilweise mit, in einer Ausführung denselben, Leitmitteln gefüllt, die die Leitungen und die Anschlüsse elektrisch miteinander verbinden.

Dadurch kann in einer Ausführung eine vorteilhafte, insbesondere kompakte, zuverlässige, leichte und/oder einfach und/oder prozesssicher herzustellende, elektrische Versorgung der Spulenwicklungen realisiert werden.

In einer Ausführung weist der Kontaktring einen ersten Ringabschnitt und einen zweiten Ringabschnitt mit einem oder mehreren Radialflanschen auf, die (jeweils) den ersten Ringabschnitt, in einer Ausführung (jeweils) eine lokale Absenkung des ersten Ringabschnitts, übergreifen und (jeweils) einen der Anschlüsse aufweisen.

In einer Weiterbildung weist der Kontaktring einen dritten Ringabschnitt auf.

In einer Ausführung übergreifen der bzw. einer oder mehrere der Radialflansch(e) des zweiten Ringabschnitts (jeweils) auch den dritten Ringabschnitt, insbesondere (jeweils) eine lokale Absenkung des dritten Ringabschnitts.

Zusätzlich oder alternativ weist der dritte Ringabschnitt einen oder mehrere Radialflansche auf, die (jeweils) den ersten Ringabschnitt, insbesondere (jeweils) eine lokale Absenkung des ersten Ringabschnitts, übergreifen und (jeweils) einen der Anschlüsse aufweisen.

Dadurch kann in einer Ausführung jeweils, insbesondere in Kombination miteinander, eine (noch) vorteilhafte(re), insbesondere kompakte (re), zuverlässige(re), leichte(re) und/oder einfach(er) und/oder prozesssicher(er) herzustellende, elektrische Versorgung der Spulenwicklungen realisiert werden.

Zusätzlich oder alternativ weist in einer Ausführung der erste Ringabschnitt einen oder mehrere Radialflansche auf, die (jeweils) einen der Anschlüsse aufweisen.

In einer Ausführung ist der erste, zweite und/oder dritte Ringabschnitt, insbesondere die bzw. wenigstens einer der lokalen Absenkungen und/oder der bzw. wenigstens einer der Radialflansche, insbesondere wenigstens einer der Anschlüsse, ganz oder teilweise mit einer Isolierhülle ummantelt.

Dadurch kann in einer Ausführung eine (noch) vorteilhafte(re), insbesondere kompakte(re), zuverlässige(re), leichte(re) und/oder einfach(er) und/oder prozesssicher (er) herzustellende, elektrische Versorgung der Spulenwicklungen realisiert werden.

In einer Ausführung erstrecken sich der bzw. wenigstens einer der Radialflansch(e) des zweiten Ringabschnitts (jeweils) von dem zweiten Ringflansch nach radial außen oder innen. Zusätzlich oder alternativ erstrecken sich der bzw. wenigstens einer der Radialflansch(e) des dritten Ringabschnitts (jeweils) von dem dritten Ringflansch nach radial außen oder innen. Zusätzlich oder alternativ erstrecken sich der bzw. wenigstens einer der Radialflansch(e) des ersten Ringabschnitts (jeweils) von dem ersten Ringflansch nach radial außen oder innen.

Dadurch kann in einer Ausführung eine (noch) vorteilhafte(re), insbesondere kompakte(re), zuverlässige(re), leichte(re) und/oder einfach(er) und/oder prozesssicher (er) herzustellende, elektrische Versorgung der Spulenwicklungen realisiert werden.

Zusätzlich oder alternativ weisen der bzw. einer oder mehrere der Radialflansch(e) des ersten Ringabschnitts, zweiten Ringabschnitts und/oder dritten Ringabschnitts (jeweils) eine U-artige Bucht oder ein Auge bzw. zwei Schenkel auf, die einander nicht kreuzen ("Bucht") bzw. einander kreuzen ("Auge").

Hierdurch kann in einer Ausführung der Radialflansch besonders einfach hergestellt werden, in einer Ausführung mittels Umformen, insbesondere Biegen.

Zusätzlich oder alternativ weisen der bzw. einer oder mehrere der Radialflansch(e) des ersten Ringabschnitts, zweiten Ringabschnitts und/oder dritten Ringabschnitts (jeweils) einen Axialflansch auf, der seinerseits den entsprechenden Anschluss bzw. einen der Anschlüsse aufweist.

Dadurch kann in einer Ausführung eine vorteilhafte, insbesondere kompakte, zuverlässige, leichte und/oder einfach und/oder prozesssicher herzustellende, elektrische Versorgung der Spulenwicklungen realisiert werden.

In einer Ausführung schließen Längsachsen der Bohrungen in dem Kontaktring- und/oder Statorkörper mit einer Rotations- bzw. Haupt- bzw. Längsachse des Stators, um die (dieser) ein(en) Rotor des Elektromotors dreht, einen Winkel ein, der höchstens 30°, insbesondere höchstens 15°, in einer Ausführung höchstens 5° beträgt.

Mit anderen Worten sind diese Bohrungen in einer Ausführung, wenigstens im Wesentlichen, Axialbohrungen bzw. parallel zur Rotations- bzw. Haupt- bzw. Längsachse des Stators.

Dadurch kann in einer Ausführung die Herstellung verbessert, insbesondere vereinfacht und/oder beschleunigt, werden.

In einer Ausführung schließen Längsachsen der Bohrungen in dem Kontaktring- und/oder Statorkörper mit der Rotations- bzw. Haupt- bzw. Längsachse des Stators, um die (dieser) ein(en) Rotor des Elektromotors dreht, einen Winkel ein, der zwischen 60° und 120°, insbesondere zwischen 75° und 105°, in einer Ausführung zwischen 85° und 95° beträgt.

Mit anderen Worten sind diese Bohrungen in einer Ausführung, wenigstens im Wesentlichen, Radialbohrungen bzw. senkrecht zur Rotations- bzw. Haupt- bzw. Längsachse des Stators.

Dadurch kann in einer Ausführung die axiale Bauhöhe reduziert und/oder eine (axiale) Stirnseite besser genutzt und/oder besser, insbesondere störungsfreier, ausgebildet werden.

In einer Ausführung weisen die Leitmittel Zinn, insbesondere eine Zinnlegierung, auf.

Dieses wird in einer Weiterbildung als Schmelze in die (jeweilige(n)) Bohrung(en) eingefüllt, in einer anderen Weiterbildung als Festkörper, insbesondere mit anschließendem Aufschmelzen.

Dadurch kann in einer Ausführung, insbesondere aufgrund des relativ niedrigen Schmelzpunktes von Zinn und in Hinblick auf die Isolierhülle, eine vorteilhafte elektrische Verbindung realisiert werden.

Zusätzlich oder alternativ weisen die Leitmittel in einer Ausführung elektrisch leitfähigen Klebstoff auf.

Auch hierdurch kann in einer Ausführung, insbesondere aufgrund des Wegfalls von Aufschmelzen und in Hinblick auf die Isolierhülle, eine elektrische Verbindung vorteilhaft hergestellt werden.

Die Leitmittel sind stoffschlüssig, insbesondere mittels wenigstens teilweisem Aufschmelzen, in den Bohrungen befestigt.

Dadurch kann in einer Ausführung eine vorteilhafte, insbesondere zuverlässige und/oder widerstandsarme, elektrische Verbindung realisiert werden.

In einer Ausführung sind bzw. werden die Leitmittel reibschlüssig, in einer Weiterbildung mittels Verschrauben oder Presspassungen, in den Bohrungen befestigt. In einer Weiterbildung weisen die Leitmittel entsprechend Schrauben oder Presssitze auf, sie können insbesondere Schrauben oder Einpresskörper, insbesondere Einpressstifte, bzw. Abschnitte hiervon sein.

Dadurch kann in einer Ausführung eine vorteilhafte, insbesondere zuverlässige und/oder (de)montagefreundliche, elektrische Verbindung realisiert werden.

Allgemein sind in einer Ausführung die Leitmittel beim wenigstens teilweisen (Be)Füllen der (jeweiligen) Bohrung(en), insbesondere elastisch und/oder plastisch deformierbare bzw. deformierte, Festköper bzw. werden bzw. sind (als Festkörper) wenigstens teilweise in die Bohrungen eingeführt, die dadurch mit diesen Leitmitteln gefüllt werden bzw. sind, was in einer Ausführung das Füllen der bzw. Einführen in die Bohrungen erleichtert.

In einer anderen Ausführung werden die, insbesondere beim (Be)Füllen flüssigen, körnigen, pulverförmigen oder pastösen, Leitmittel nach dem wenigstens teilweisen (Be)Füllen der (jeweiligen) Bohrung(en) in diesen fest bzw. sind nach dem wenigstens teilweisen (Be)Füllen der Bohrungen in diesen ausgehärtet, was in einer Ausführung die elektrische Verbindung verbessert.

In einer Ausführung ist bzw. wird der Kontaktring wenigstens teilweise in den Statorkörper eingeformt, in einer Ausführung beim wenigstens teilweisen Einformen der Leitungen in dem Statorkörper, insbesondere also wenigstens teilweise eingegossen, in einer Ausführung wenigstens teilweise eingespritzt, insbesondere mit Kunststoff.

Dadurch kann in einer Ausführung eine (noch) vorteilhafte(re), insbesondere kompakte(re), zuverlässige(re), leichte(re) und/oder (noch) einfach(er) und/oder prozesssicher(er) herzustellende, elektrische Versorgung der Spulenwicklungen realisiert werden.

In einer Ausführung ist bzw. wird der Kontaktring wenigstens teilweise (axial) auf den, insbesondere urgeformten, Statorkörper aufgesetzt, insbesondere -schoben, in einer Ausführung umgreift der Kontaktring den Statorkörper in Umfangsrichtung. In einer Ausführung wird bzw. ist der Kontaktring reibschlüssig, insbesondere durch die Leitmittel und/oder eine Presspassung, an dem Statorkörper befestigt.

Dadurch kann in einer Ausführung die Herstellung und/oder (De)Montage verbessert werden.

Eine Axialrichtung ist in einer Ausführung parallel zu (eine)r Rotationsachse des Stators, eine Umfangsrichtung eine Drehrichtung um diese Rotationsachse, eine Radialrichtung senkrecht zur Axial- und Umfangsrichtung.

Entsprechend erstreckt sich ein Radialflansch in einer Ausführung in radialer Richtung, in einer Ausführung schließt er mit der Radialrichtung einen Winkel ein, der höchstens 30° beträgt. Ein Axialflansch erstreckt sich entsprechend in einer Ausführung in axialer Richtung, in einer Ausführung schließt er mit der Axialrichtung einen Winkel ein, der höchstens 30° beträgt.

Eine lokale Absenkung ist in einer Ausführung eine lokale Absenkung in Axialrichtung. In einer Ausführung ist sie durch Umformen, insbesondere Biegen, hergestellt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Kontaktrings eines Stators eines Elektromotors nach einer Ausführung der vorliegenden Erfindung bei dessen Herstellung in axialer Draufsicht;
- Fig. 2: ein Detail des Kontaktrings in vergrößerter perspektivischer Ansicht;
- Fig. 3: den Stator bei dessen Herstellung in vergrößerter perspektivischer Ansicht;
- Fig. 4: einen Teil des Stators mit ausgeblendetem Kontaktringkörper;
- Fig. 5: den Stator in Fig. 3 entsprechender Darstellung; und
- Fig. 6: ein Detail eines Kontaktrings eines Stators eines Elektromotors nach einer weiteren Ausführung der vorliegenden Erfindung in Fig. 2 entsprechender Darstellung.

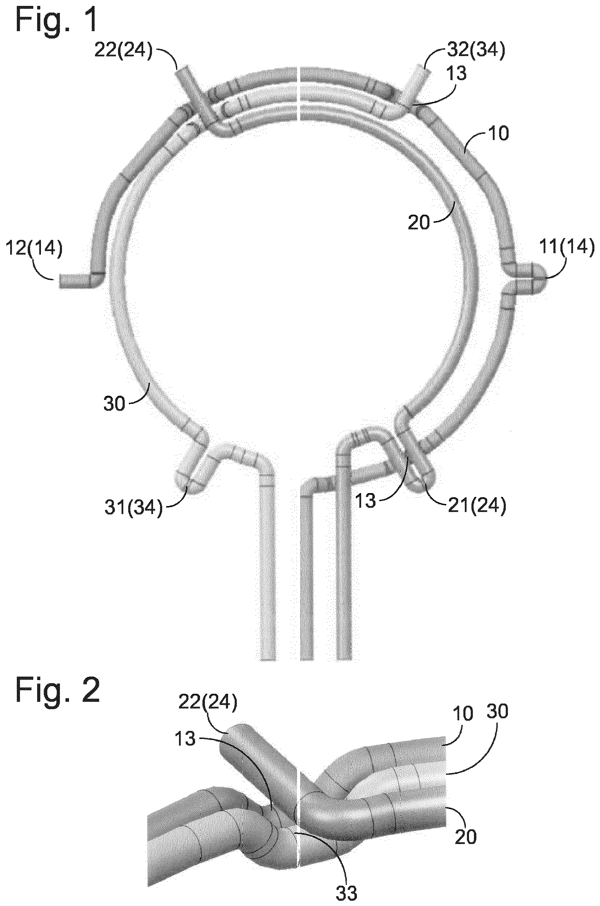

Fig. 1 zeigt einen Teil eines Kontaktrings eines Stators eines Elektromotors nach einer Ausführung der vorliegenden Erfindung bei dessen Herstellung in axialer Draufsicht.

Der Kontaktring weist einen mit einer Isolierhülle ummantelten, radial außen angeordneten bzw. äußersten ersten Ringabschnitt 10, einen mit einer Isolierhülle ummantelten, radial innen angeordneten bzw. innersten zweiten Ringabschnitt 20 und einen mit einer Isolierhülle ummantelten, radial zwischen erstem und zweiten Ringabschnitt angeordneten dritten Ringabschnitt 30 auf, die konzentrisch ineinander angeordnet sind.

Der erste Ringabschnitt 10 weist zwei Radialflansche 11, 12 auf, die jeweils einen Anschluss 14 aufweisen. Dabei weist der eine Radialflansch 11 eine U-artige Bucht auf, die den entsprechenden Anschluss 14 aufweist.

Der dritte Ringabschnitt 30 weist ebenfalls zwei Radialflansche 31, 32 auf, die sich jeweils von dem dritten Ringabschnitt nach radial außen erstrecken und einen Anschluss 34 aufweisen.

Dabei weist der eine Radialflansch 31 eine U-artige Bucht auf, die den entsprechenden Anschluss 34 aufweist. Der andere Radialflansch 32 übergreift eine lokale Absenkung 13 des ersten Ringabschnitts 10 und weist den entsprechenden Anschluss 34 auf.

Der zweite Ringabschnitt 20 weist zwei Radialflansche 21, 22 auf, die sich jeweils von dem zweiten Ringabschnitt nach radial außen erstrecken, eine lokale Absenkung 13 des ersten Ringabschnitts 10 übergreifen und einen Anschluss 24 aufweisen.

Dabei weist der eine Radialflansch 21 eine U-artige Bucht auf, die den entsprechenden Anschluss 24 aufweist und (nur) den ersten Ringabschnitt 10 übergreift. Der andere Radialflansch 22 übergreift eine lokale Absenkung 33 des dritten Ringabschnitts 30 sowie eine lokale Absenkung 13 des ersten Ringabschnitts 10 und weist den entsprechenden Anschluss 24 auf (vgl. Fig. 2).

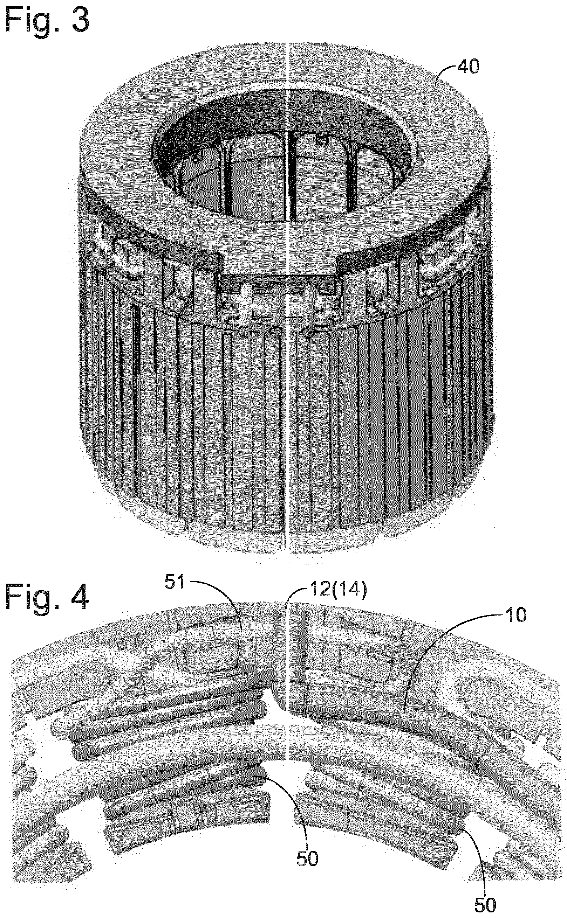

Die solcherart angeordneten Ringabschnitte und Radialflansche werden in einen Kontaktringkörper 40 eingegossen, der auf eine Anordnung von Spulenwicklungen 50 axial aufgesetzt wird, die durch Leitungen 51 elektrisch versorgt werden und hierzu teilweise untereinander durch die Leitungen 51 verbunden sind, wie in Fig. 4 angedeutet, in der Kontaktringkörper ausgeblendet ist.

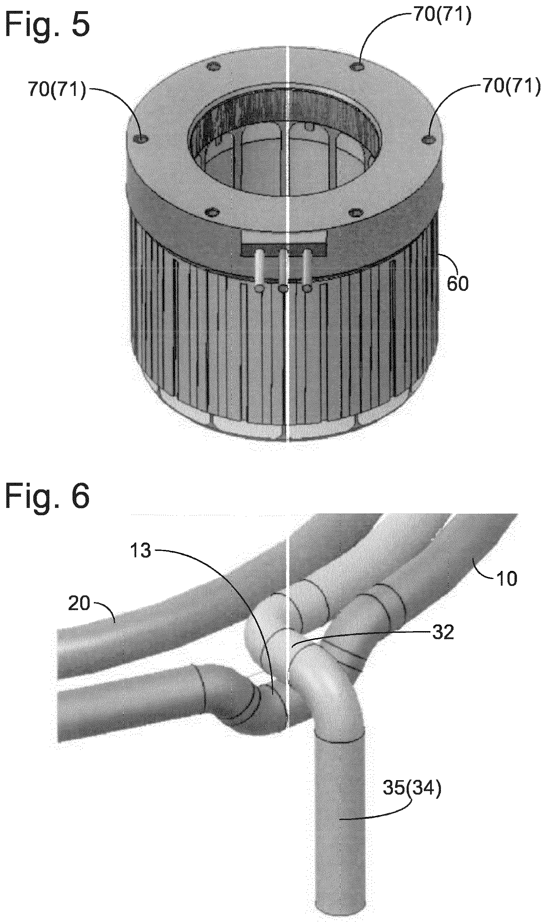

Anschließend werden die Leitungen 51 in einen Statorkörper 60 eingegossen (vgl. Fig. 5), wobei der Kontaktring(körper 40) wenigstens teilweise in diesen Statorkörper mit eingegossen wird. In einer Abwandlung kann auch zunächst der Statorkörper 60 urgeformt und anschließend der Kontaktringkörper 40 auf diesen aufgesetzt werden.

Dann werden axiale Bohrungen 70 hergestellt, die jeweils einen der Anschlüsse 14, 24, 34 und eine der Leitungen 51 an- oder durchschneiden, und anschließend mit Leitmitteln 71, beispielsweise Schrauben oder erstarrendem Zinn oder elektrisch leitendem Klebstoff oder dergleichen, gefüllt, die diese Leitungen und Anschlüsse elektrisch verbinden.

Fig. 6 zeigt in Fig. 2 entsprechender Weise ein Detail eines Kontaktrings eines Stators eines Elektromotors nach einer weiteren Ausführung der vorliegenden Erfindung.

Einander entsprechende Merkmale sind durch identische Bezugszeichen identifiziert, so dass auf die vorstehende Beschreibung der im Übrigen baugleichen Ausführung der Fig. 1-5 Bezug genommen und nachfolgend nur auf Unterschiede eingegangen wird.

In der Ausführung der Fig. 6 weisen die Radialflansche 11, 12, 21, 22, 31, 32 jeweils einen Axialflansch auf, der den entsprechenden Anschluss dieses Radialflansches aufweist, wie in Fig. 6 exemplarisch für den Radialflansch 32, dessen Axialflansch 35 und dessen Anschluss 34 dargestellt.

Anstelle axialer Bohrungen 70 werden daher in der Ausführung der Fig. 6 radiale Bohrungen hergestellt, die jeweils einen der Anschlüsse 14, 24, 34 und eine der Leitungen 51 an- oder durchschneiden, und anschließend mit Leitmitteln gefüllt, die diese Leitungen und Anschlüsse elektrisch verbinden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

| | |
|---|---|
| 10 | erster Ringabschnitt |
| 11 | Bucht (Radialflansch) |
| 12 | Radialflansch |
| 13 | lokale Absenkung |
| 14 | Anschluss |
| 20 | zweiter Ringabschnitt |
| 21 | Bucht (Radialflansch) |
| 22 | Radialflansch |
| 24 | Anschluss |
| 30 | dritter Ringabschnitt |
| 31 | Bucht (Radialflansch) |
| 32 | Radialflansch |
| 33 | lokale Absenkung |
| 34 | Anschluss |
| 35 | Axialflansch |
| 40 | Kontaktringkörper |
| 50 | Spulenwicklung |
| 51 | Leitung |
| 60 | Statorkörper |
| 70 | Bohrung |
| 71 | Leitmittel |

## Patentansprüche

1. Stator für einen Elektromotor, wobei der Stator eine Mehrzahl von Leitungen (51) zur elektrischen Versorgung von Spulenwicklungen (50) des Stators; und einen Kontaktring mit, wenigstens teilweise mit einer Isolierhülle ummantelten, Anschlüssen (14, 24, 34) zur elektrischen Versorgung dieser Leitungen (51) aufweist, wobei diese Anschlüsse (14, 24, 34) in einem Kontaktringkörper (40) wenigstens teilweise eingeformt sind; und dieser Kontaktringkörper Bohrungen (70) aufweist, welche die Isolierhüllen der Anschlüsse (14, 24, 34) an- oder durchschneiden, **dadurch gekennzeichnet, dass** die Bohrungen (70) wenigstens teilweise mit Leitmitteln (71) gefüllt sind, die Leitmittel (71) stoffschlüssig in den Bohrungen befestigt sind und wobei diese Leitmittel (71) die Leitungen (51) und die Anschlüsse (14, 24, 34) elektrisch verbinden.

2. Stator nach dem vorhergehenden Anspruch, **dadurch gekennzeichnet, dass** der Kontaktring einen, insbesondere wenigstens teilweise mit einer Isolierhülle ummantelten, ersten Ringabschnitt (10) und einen, insbesondere wenigstens teilweise mit einer Isolierhülle ummantelten, zweiten Ringabschnitt (20) mit wenigstens einem Radialflansch (21, 22) aufweist, der den ersten Ringabschnitt, insbesondere eine lokale Absenkung (13) des ersten Ringabschnitts, übergreift und einen der Anschlüsse (24) aufweist.

3. Stator nach dem vorhergehenden Anspruch, **dadurch gekennzeichnet, dass** der Kontaktring einen, insbesondere wenigstens teilweise mit einer Isolierhülle ummantelten, dritten Ringabschnitt (30) aufweist, wobei der wenigstens eine Radialflansch (22) des zweiten Ringabschnitts auch den dritten Ringabschnitt, insbesondere eine lokale Absenkung (33) des dritten Ringabschnitts, übergreift und/oder der dritte Ringabschnitt wenigstens einen Radialflansch (32) aufweist, der den ersten Ringabschnitt, insbesondere eine lokale Absenkung (13) des ersten Ringabschnitts, übergreift und einen der Anschlüsse (34) aufweist.

4. Stator nach einem der vorhergehenden Ansprüche, **dadurch gekennzeichnet, dass** der erste Ringabschnitt wenigstens einen Radialflansch (11, 12) aufweist, der sich von dem ersten Ringflansch nach radial außen oder innen erstreckt und einen der Anschlüsse (14) aufweist; und/oder der wenigstens eine Radialflansch des zweiten Ringabschnitts sich von dem zweiten Ringflansch nach radial außen oder innen erstreckt und/oder eine U-artige Bucht (21) oder ein Auge und/oder einen Axialflansch aufweist, der einen der Anschlüsse (24) aufweist, und/oder der wenigstens eine Radialflansch des dritten Ringabschnitts sich von dem dritten Ringflansch nach radial außen oder innen erstreckt und/oder eine U-artige Bucht (31) oder ein Auge und/oder einen Axialflansch (35) aufweist, der einen der Anschlüsse (34) aufweist.

5. Stator nach einem der vorhergehenden Ansprüche, **dadurch gekennzeichnet, dass** Längsachsen der Bohrungen mit einer Rotationsachse des Stators einen Winkel einschließen, der höchstens 30° oder zwischen 60° und 120° beträgt.

6. Stator nach einem der vorhergehenden Ansprüche, **dadurch gekennzeichnet, dass** die Leitmittel Zinn und/oder elektrisch leitfähigen Klebstoff aufweisen.

7. Stator nach einem der vorhergehenden Ansprüche, wobei die Leitungen in einem Statorkörper (60) wenigstens teilweise eingeformt sind und der Kontaktring wenigstens teilweise in diesen Statorkörper eingeformt oder auf diesen aufgesetzt ist.

8. Elektromotor mit einem Stator nach einem der vorhergehenden Ansprüche.

9. Verfahren zum Herstellen eines Stators nach einem der vorhergehenden Ansprüche, mit den Schritten wenigstens teilweises Einformen der Anschlüsse (14, 24, 34) in dem Kontaktringkörper (40);
Herstellen der Bohrungen (70); und
wenigstens teilweises Füllen der Bohrungen mit den Leitmitteln (71).

## Claims

1. A stator for an electric motor, wherein the stator has a plurality of conductors (51) for supplying electrical power to coil windings (50) of the stator; and a contact ring with terminals (14, 24, 34) for supplying electrical power to these conductors (51), the terminals being at least partially enclosed in an insulating sleeve, wherein these terminals (14, 24, 34) are at least partially formed in a contact ring body (40); and this contact ring body has bores (70) which intersect or cut through the insulating sleeves of the terminals (14, 24, 34),
**characterised in that** the bores (70) are at least partially filled with conductive materials (71), the conductive materials (71) are materially bonded to the bores and these conductive materials (71) electrically connect the conductors (51) and the terminals (14, 24, 34).

2. The stator according to the preceding claim, **characterised in that** the contact ring has a first ring section (10), in particular at least partially enclosed in an insulating sleeve, and a second ring section (20), in particular at least partially covered with an insulating sleeve, having at least one radial flange (21, 22) that overlaps the first ring section, in particular a local recess (13) of the first ring section and that comprises one of the terminals (24).

3. The stator according to the preceding claim, **characterised in that** the contact ring has a third ring section (30), in particular at least partially enclosed in an insulating sleeve, wherein the at least one radial flange (22) of the second ring section also overlaps the third ring section, in particular a local recess (33) of the third ring section, and/or the third ring section has at least one radial flange (32) that overlaps the first ring section, in particular a local recess (13) of the first ring section, and comprises one of the terminals (34).

4. The stator according to any one of the preceding claims, **characterised in that** the first ring section has at least one radial flange (11, 12) extending radially outward or inward from the first ring flange and comprising one of the terminals (14); and/or the at least one radial flange of the second ring section extends radially outward or inward from the second ring flange and/or comprises a U-shaped recess (21) or an eye and/or an axial flange comprising one of the terminals (24), and/or the at least one radial flange of the third ring section extends radially outward or inward from the third ring flange and/or comprises a U-shaped recess (31) or an eye and/or an axial flange (35) comprising one of the terminals.

5. The stator according to any one of the preceding claims, **characterised in that** longitudinal axes of the bores enclose an angle with a rotational axis of the stator that is at most 30° or between 60° and 120°.

6. The stator according to any one of the preceding claims, **characterised in that** the conductive materials comprise tin and/or electrically conductive adhesive.

7. The stator according to any one of the preceding claims, wherein the conductors are at least partially formed in a stator body (60) and the contact ring is at least partially formed in or placed on this stator body.

8. An electric motor having a stator according to any one of the preceding claims.

9. A method for producing a stator according to any one of the preceding claims, comprising the steps of at least partially forming the terminals (14, 24, 34) into the contact ring body (40); producing the bores (70); and
at least partially filling the bores with the conductive materials (71).

## Revendications

1. Stator pour un moteur électrique, le stator présentant une pluralité de conducteurs (51) destinés à l'alimentation électrique d'enroulements (50) du stator ; et une bague de contact comportant des bornes (14, 24, 34), au moins partiellement entourées d'une gaine isolante, destinées à l'alimentation électrique de ces conducteurs (51), ces bornes (14, 24, 34) étant au moins partiellement moulées dans un corps (40) de bague de contact ; et ce corps de bague de contact présentant des alésages (70) qui entaillent ou traversent les gaines isolantes des bornes (14, 24, 34),
**caractérisé en ce que** les alésages (70) sont au moins partiellement remplis de matériaux conducteurs (71), les matériaux conducteurs (71) sont fixés par complémentarité de matière aux alésages et ces matériaux conducteurs (71) connectant électriquement les conducteurs (51) et les bornes (14, 24, 34).

2. Stator selon la revendication précédente, **caractérisé en ce que** la bague de contact présente une première section annulaire (10), en particulier au moins partiellement entourée d'une gaine isolante, et une deuxième section annulaire (20), en particulier au moins partiellement entourée d'une gaine isolante, comportant au moins une bride radiale (21, 22) qui chevauche la première section annulaire, en particulier un évidement local (13) de la première section annulaire et qui présente l'une des bornes (24).

3. Stator selon la revendication précédente, **caractérisé en ce que** la bague de contact présente une troisième section annulaire (30), en particulier au moins partiellement entourée d'une gaine isolante, l'au moins une bride radiale (22) de la deuxième section annulaire chevauchant également la troisième section annulaire, en particulier un évidement local (33) de la troisième section annulaire, et/ou la troisième section annulaire présentant au moins une bride radiale (32) qui chevauche la première section annulaire, en particulier un évidement local (13) de la première section annulaire, et présente l'une des bornes (34).

4. Stator selon l'une quelconque des revendications précédentes, **caractérisé en ce que** la première section annulaire présente au moins une bride radiale (11, 12) s'étendant radialement vers l'extérieur ou vers l'intérieur de la première bride annulaire et présentant l'une des bornes (14) ; et/ou l'au moins une bride radiale de la deuxième section annulaire s'étendant radialement vers l'extérieur ou vers l'intérieur de la deuxième bride annulaire et/ou présentant une gorge en forme de U (21) ou un œillet et/ou une bride axiale, présentant l'une des bornes (24), et/ou l'au moins une bride radiale de la troisième section annulaire s'étendant radialement vers l'extérieur ou vers l'intérieur de la troisième bride annulaire et/ou présentant une gorge en forme de U (31) ou un œillet et/ou une bride axiale (35), présentant l'une des bornes.

5. Stator selon l'une quelconque des revendications précédentes, **caractérisé en ce que** les axes longitudinaux des alésages forment, avec un axe de rotation du stator, un angle d'au plus 30 ° ou compris entre 60 ° et 120 °.

6. Stator selon l'une quelconque des revendications précédentes, **caractérisé en ce que** les matériaux conducteurs présentent de l'étain et/ou un adhésif électroconducteur.

7. Stator selon l'une quelconque des revendications précédentes, dans lequel les conducteurs sont au moins partiellement formés dans un corps de stator (60) et la bague de contact est au moins partiellement formée dans ou placée sur ce corps de stator.

8. Moteur électrique comportant un stator selon l'une quelconque des revendications précédentes.

9. Procédé de fabrication d'un stator selon l'une quelconque des revendications précédentes, comportant les étapes de formation au moins partielle des bornes (14, 24, 34) dans le corps de bague de contact (40) ;
de fabrication des alésages (70) ; et
de remplissage au moins partiel des alésages avec les matériaux conducteurs (71).
